Europäisches Patentamt

European Patent Office

Office européen des brevets

(11) Veröffentlichungsnummer: 0 334 838
A2

(12) EUROPÄISCHE PATENTANMELDUNG

(21) Anmeldenummer: 89890084.0

(22) Anmeldetag: 21.03.89

(51) Int. Cl.⁴: F 16 K 11/04
F 16 K 31/56

(30) Priorität: 21.03.88 AT 753/88

(43) Veröffentlichungstag der Anmeldung:
27.09.89 Patentblatt 89/39

(84) Benannte Vertragsstaaten:
DE ES FR GB GR IT

(71) Anmelder: RÖHREN-UND PUMPENWERK RUDOLF
BAUER AKTIENGESELLSCHAFT
A-8570 Voitsberg (AT)

(72) Erfinder: Seebacher, Franz
Nepomukgasse 16
A-8045 Graz (AT)

(74) Vertreter: Piso, Eberhard, Dr.
Patentanwälte Dipl.-Ing. Herbert C.E. Krause Dr.
Eberhard Piso Gluckgasse 1 Postfach 328
A-1015 Wien 1 (AT)

(54) Umschaltmechanismus für ein Umsteuer-Sitzventil.

㊲ Umschaltmechanismus für ein Umsteuer-Sitzventil, wobei in einem Endbereich des Ventilhohlkolbens (2) zwei, wie an sich bekannt, in entgegengesetzte Richtung weisende, gelenkig angeordnete, vorzugsweise als Hebel ausgebildete Umschalt-elemente (4) angeordnet sind, die Hebel (4) durch Federkraft und Anschlag positioniert sind und in ihren äußeren Endbereichen je einen von zwei um 180° versetzten, sich horizontal erstreckenden Anschlagwinkeln (5) durchsetzen, wobei jeder Anschlagwinkel (5) mit zwei in Abstand voneinander angeord-neten Anschlägen (6a, 6b) für je einen Hebel versehen ist, jeder Hebel (4) mit einem sich senkrecht zur Längsachse (11) des Ventilhohlkolbens (2) erstreckenden Schaltbügel (9) in Verbindung steht, welcher von der sich in Achsrichtung des Ventilhohlkolbens erstreckenden, mit einem Arbeitszylinder verbundenen Steuerstange (12) durchsetzt wird, sich der Schaltbügel (9) in Umschaltstellung am Gehäusedeckel (15) oder am Anschlagwinkel (5) abstützt, und die Steuerstange (12) in Abstand zu je einer Außenfläche des Schaltbügels (9) einen Mitnehmer (13) aufweist, wobei eine Betätigung des Mechanismus durch die Steuerstange (12) eine zwangsweise Abhebung des Ventilhohlkolbens (2) aus seinem Dichtsitz (3) in zur Steuerstangenbewegung entgegengesetzten Richtung be-wirkt.

Fig.1

Bundesdruckerei Berlin

## Beschreibung

Die Erfindung betrifft einen Umschaltmechanismus für ein Umsteuer-Sitzventil. Derartige Mechanismen sind bekannt, weisen allerdings den Nachteil auf, daß bei entsprechend großen hydraulischen Rückstellkräften der ausgelenkte Kolben wieder in seine ursprüngliche Stellung zurückgeleitet bzw. überhaupt nicht vom Sitz abgehoben wird und daher keine Umschaltung erfolgt.

Aufgabe der Erfindung ist es, einen Umschaltmechanismus für ein Umsteuer-Sitzventil zu schaffen, der eine zwangsweise Abhebung des Kolbens aus seinem Dichtsitz im Ventilgehäuse über ein Umschaltelement durch die volle Kraft des Arbeitszylinders und somit ein sicheres Umschalten gewährleistet.

Die Erfindung löst die Aufgabe dadurch, daß in einem Endbereich des Ventilhohlkolbens zwei, wie an sich bekannt, in entgegengesetzte Richtung weisende, gelenkig angeordnete, vorzugsweise als Hebel ausgebildete Umschaltelemente angeordnet sind, daß die Hebel durch Federkraft und Anschlag positioniert sind und in ihren äußeren Endbereichen je einen von zwei um 180° versetzten, sich horizontal erstreckenden Anschlagwinkeln durchsetzen, wobei jeder Anschlagwinkel mit zwei in Abstand voneinander in Längsrichtung angeordneten Anschlägen für je einen Hebel versehen ist, daß jeder Hebel mit einem sich senkrecht zur Längsachse des Ventilhohlkolbens erstreckenden Schaltbügel in Verbindung steht, welcher von der sich in Achsrichtung des Ventilhohlkolbens erstreckenden, mit einem Arbeitszylinder verbundenen Steuerstange durchsetzt wird, daß sich der Schaltbügel in Umschaltstellung am Gehäusedeckel oder am Anschlagwinkel abstützt, und daß die Steuerstange in Abstand zu je einer Außenfläche des Schaltbügels einen Mitnehmer aufweist, wobei eine Betätigung des Mechanismus durch die Steuerstange eine zwangsweise Abhebung des Ventilhohlkolbens aus seinem Dichtsitz in zur Steuerstangenbewegung entgegengesetzten Richtung bewirkt.

Ein weiteres Merkmal der Erfindung ist es, daß die Hebel die Anschlagwinkel in einem Längsschlitz durchsetzen, dessen beide in Längsrichtung voneinander getrennten Kanten Anschläge für die Hebel bilden.

Ein anderes Merkmal der Erfindung ist es, daß die beiden Hebel über zwei Zugfedern mitsammen verbunden sind.

Ein weiteres Merkmal der Erfindung ist es, daß jeder Hebel in seinem äußeren Endbereich von einem quer zur Achsrichtung des Ventilhohlkolbens verlaufenden Bolzen senkrecht durchsetzt ist, wobei die Bolzen die Zugfedern aufnehmen.

Ein anderes, weiteres Merkmal der Erfindung ist es, daß jeder Hebel in seinem inneren Endbereich mittels eines Bolzens mit dem Ventilhohlkolben gelenkig verbunden ist.

Ein weiteres Merkmal der Erfindung ist es, daß der Anschlagwinkel mit seinem einen Ende mit dem Ventilgehäuse verbunden ist und sich an seinem anderen Ende der Schaltbügel abstützt.

Ein weiteres Merkmal der Erfindung ist es, daß der Anschlagwinkel U-förmig ist.

Ein weiteres Merkmal der Erfindung ist es, daß der Schaltbügel mit dem Hebel über einen U-Bügel gelenkig verbunden ist.

Ein abschließendes Merkmal der Erfindung ist es, daß durch den Abstand eines jeden Mitnehmers zur Außenfläche des Schaltbügels ein Freihub für die Steuerstange definiert ist, wodurch beim Umschalten nur der Steuerbügel beschleunigt werden muß.

Die Erfindung wird im folgenden an Hand eines Ausführungsbeispieles unter Zuhilfenahme der angeschlossenen Zeichnung näher beschrieben.

Es zeigen

Fig.1 einen Längsschnitt durch ein Umsteuerventil mit dem erfindungsgemäßen Umschaltmechanismus;

Fig.2 einen Querschnitt entlang der Linie C-C der Fig.1 bei Totpunktstellung der Hebel und

Fig.3a-3d einen Teilschnitt durch ein Umsteuerventil mit fortschreitenden Schaltstellungen des Umschaltmechanismus.

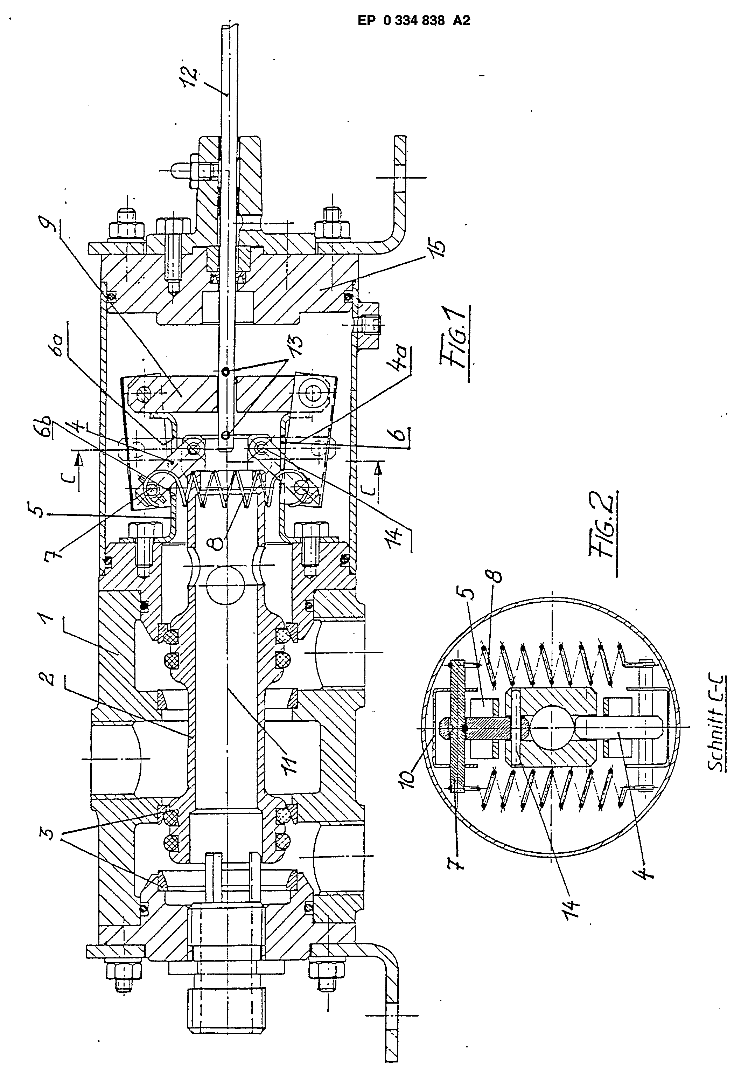

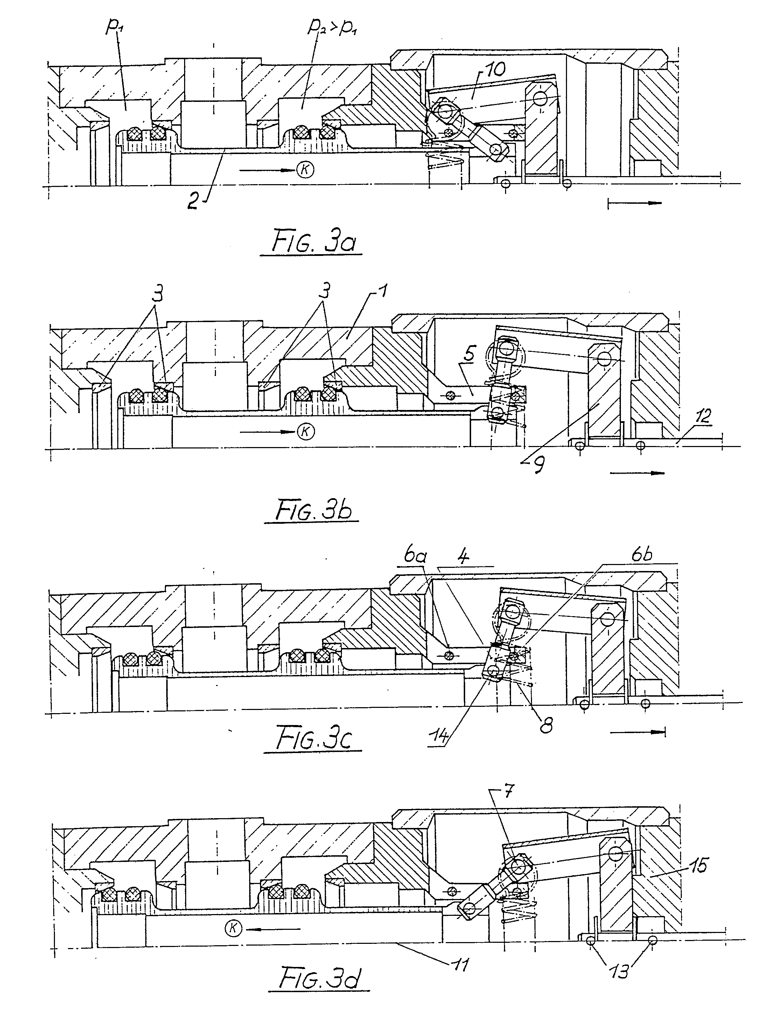

Der in einem Ventilgehäuse (1) angeordnete Ventilhohlkolben (2) wird durch im Gehäuse eines 2-4 Wege-Umsteuer-Sitzventils angeordnete Dichtsitze (3) in seiner Stellung gehalten. Um ein Umschalten des Ventils, d.h. ein Versetzen des Ventilhohlkolbens (2) zu bewerkstelligen, ist der Ventilhohlkolben über einen Umschalt mechanismus mit der Steuerstange (12) verbunden, welche mit einem nicht gezeigten Arbeitszylinder in Verbindung steht. Der Ventilhohlkolben (2) ist an seinem der Steuerstange (12) zugewandten Ende in seinem Mittelbereich mit zwei um 180° versetzte,vom Kolben wegweisende Hebeln (4) gelenkig verbunden. Diese Hebel (4) sind in ihren äußeren Bereichen von jeweils einem Querbolzen (7) durchsetzt, welche zur Aufnahme von zwei, die Hebel (4) verbindenden Federn (8) dienen und mit einem U-Bügel (10) gelenkig verbunden sind. In ihren inneren Bereich sind die Hebel (4) von je einem Bolzen (14) zur gelenkigen Verbindung mit dem Ventilhohlkolben (2) durchsetzt. Die Federn (8) verlaufen parallel zueinander an je einer Seite der Hebel. Die Hebel (4) durchsetzen ihrerseits jeder einen U-förmigen Anschlagwinkel (5) in einem Längsschlitz (6). Die Anschlagwinkel sind mit ihrem einen Ende am Ventilgehäuse (1) fest angeordnet, ihr anderes Ende dient dem senkrecht zur Ventilkolbenachse (11) angeordneten Schaltbügel (9) als Anschlag. Dieser Schaltbügel (9) wiederum ist über je einen U-Bügel (10) mit je einem Hebel (4) gelenkig verbunden, dessen Anlenkung über den Querbolzen (7) erfolgt. Der Schaltbügel (9) wird zentral von der Steuerstange (12) durchsetzt, wobei die Steuerstange in ihrer Längsbewegung durch zwei beidseitig aus der Stange austretende Mitnehmer (13) begrenzt ist, welche in den Bereichen der beiden Außenflächen des Schaltbügels angeordnet sind. Wie in Fig.1 dargestellt, bewirkt die vom nicht gezeigten Arbeitskolben über die Steuerstange (12) eingeleitete Umschaltbewegung ein Anstellen der beiden mit dem Ventilhohlkolben (2) gelenkig verbundenen Hebel (4) an den jeweiligen Anschlag (6a, b) des Längsschlitzes (6) im Anschlagwinkel (5) in Bewegungsrichtung der Steuerstange (12). Bei weiterer Bewegung der Steuerstange bewegen sich auch die kraftschlüssig mit der Steuerstange verbundenen Hebel (4) bis zum Erreichen der Totpunktlage (4a) (strichlierte Stellung in Fig.1); weiter und stützen sich anschließend kurz nach Erreichen der Totpunktlage an dem entsprechenden Anschlag (6a, b) ab (Fig.3b). Es wird dadurch eine Hebelwirkung des Hebels über den Anschlag auf den Ventilhohlkolben (2) ausgeübt, wodurch dieser aus seinem Dichtsitz (3) zwangsweise abgedrückt wird, (Fig.3c). Die nach Erreichen der Totpunktlage der Federn (8) erzielte Zwangsabhebung des Ventilhohlkolbens (2) verläuft in zur Bewegungsrichtung der Steuerstange entgegengesetzten Richtung; infolge der Federkraft wird der Ventilhohlkolben auf den seinem ursprünglichen Dichtsitz (3) gegenüberliegenden Dichtsitz weiterbewegt und an diesen angedrückt, die Steuerstange steht wieder in einer Endstellung eines Hubvorganges (Fig.3d). Ⓚ bedeutet die Anpreßrichtung des Kolbens. Durch die kraftschlüssige Abhebung des Ventilhohlkolbens (2) ist es lediglich notwendig, den Schaltbügel (9) zu beschleunigen. Es erfolgt somit eine Zwangsabhebung, welche bewirkt, daß der Ventilhohlkolben (2) nicht mehr aufgrund von Rückstellkräften über den Arbeitskolben in seine ursprüngliche Lage zurückkehren kann.

In der in Fig.3a gezeigten Stellung herrschen im Umsteuerventil unterschiedliche Drücke, d.h. der Druck in der linken Kammer ist kleiner als jener in der rechten Kammer. Ist der Ventilhohlkolben (2) vom Dichtsitz (3) gehoben, sind alle Drücke im Umsteuerventil gleich groß, d.h. es wirken keine zusätzlichen Kräfte auf den Kolben, die Federn (8) ziehen die Hebel (4) zusammen und der Ventilhohlkolben (2) wird in den neuen Dichtsitz gedrückt, wobei sich der Schaltbügel (9) je nach Hebelrichtung entweder am Anschlagwinkel (5) oder am Gehäusedeckel (15) abstützt. Damit die Steuerstange (12) vom Umschaltmechanismus nicht beschleunigt werden muß, sind die Mitnehmer (13) an der Steuerstange derart voneinander entfernt angeordnet, daß ein Freihub des Umschaltmechanismus möglich ist. Dies gewährleistet vor allem ein schnelles Schalten.

**Patentansprüche**

1. Umschaltmechanismus für ein Umsteuer-Sitzventil, dadurch gekennzeichnet, daß in einem Endbereich des Ventilhohlkolbens (2) zwei, wie an sich bekannt, in entgegengesetzte Richtung weisende, gelenkig angeordnete, vorzugsweise als Hebel ausgebildete Umschaltelemente (4) angeordnet sind, daß die Hebel (4) durch Federkraft und Anschlag positioniert sind und in ihren äußeren Endbereichen je einen von zwei um 180° versetzten, sich horizontal erstreckenden Anschlagwinkeln (5) durchsetzen, wobei jeder Anschlagwinkel (5) mit zwei in Abstand voneinander in Längsrichtung angeordneten Anschlägen (6a, 6b) für je einen Hebel (4) versehen ist, daß jeder Hebel (4) mit einem sich senkrecht zur Längsachse (11) des Ventilhohlkolbens (2) erstreckenden Schaltbügel (9) in Verbindung steht, welcher von der sich in Achsrichtung des Ventilhohlkolbens erstreckenden, mit einem Arbeitszylinder verbundenen Steuerstange (12) durchsetzt wird, daß sich der Schaltbügel (9) in Umschaltstellung am Gehäusedeckel (15) oder am Anschlagwinkel (5) abstützt, und daß die Steuerstange (12) in Abstand zu je einer Außenfläche des Schaltbügels (9) einen Mitnehmer (13) aufweist, wobei eine Betätigung des Mechanismus durch die Steuerstange (12) eine zwangsweise Abhebung des Ventilhohlkolbens (2) aus seinem Dichtsitz (3) in zur Steuerstangenbewegung entgegengesetzten Richtung bewirkt.

2. Umschaltmechanismus nach Anspruch 1, dadurch gekennzeichnet, daß die Hebel (4) die Anschlagwinkel (5) in einem Längsschlitz (6) durchsetzen, dessen beide in Längsrichtung voneinander getrennten Kanten Anschläge (6a, 6b) für die Hebel (4) bilden.

3. Umschaltmechanismus nach Anspruch 1, dadurch gekennzeichnet, daß die beiden Hebel (4) über zwei Zugfedern (8) mitsammen verbunden sind.

4. Umschaltmechanismus nach Anspruch 3, dadurch gekennzeichnet, daß jeder Hebel (4) in seinem äußeren Endbereich von einem quer zur Achsrichtung des Ventilhohlkolbens verlaufenden Bolzen (7) senkrecht durchsetzt ist, wobei die Bolzen (7) die Zugfedern (8) aufnehmen.

5. Umschaltelement nach den Ansprüchen 1 bis 4, dadurch gekennzeichnet, daß jeder Hebel (4) in seinem inneren Endbereich mittels eines Bolzens (14) mit dem Ventilhohlkolben (2) gelenkig verbunden ist.

6. Umschaltmechanismus nach Anspruch 1, dadurch gekennzeichnet, daß der Anschlagwinkel (5) mit seinem einen Ende mit dem Ventilgehäuse verbunden ist und sich an seinem anderen Ende der Schaltbügel (9) abstützt.

7. Umschaltmechanismus nach Anspruch 5, dadurch gekennzeichnet, daß der Anschlagwinkel (5) U-förmig ist.

8. Umschaltmechanismus nach Anspruch 1, dadurch gekennzeichnet, daß der Schaltbügel mit dem Hebel über einen U-Bügel (10) gelenkig verbunden ist.

9. Umschaltmechanismus nach Anspruch 1, dadurch gekennzeichnet, daß durch den Abstand eines jeden Mitnehmers (13) zur Außenfläche des Schaltbügels (9) ein Freihub für die Steuerstange (12) definiert ist, wodurch beim Umschalten nur der Steuerbügel (9) beschleunigt werden muß.

Fig.1

Schnitt C-C

Fig.2

_FIG. 3a_

_FIG. 3b_

_FIG. 3c_

_FIG. 3d_